# EUROPEAN PATENT SPECIFICATION

(11) **EP 2 636 926 B1**
(45) Date of publication and mention of the grant of the patent: **07.01.2015**
(21) Application number: 12158447.8
(22) Date of filing: 07.03.2012
(51) Int. Cl.: F16H 59/10, F16H 59/04, F16H 61/24

(54) **Gearshift device for an automotive transmission**
Schaltvorrichtung für ein Kraftfahrzeuggetriebe
Dispositif de changement de vitesses pour transmission automobile

(43) Date of publication of application: 11.09.2013
(73) Proprietor: Fico Triad, S.A., 08028 Barcelona (ES)
(72) Inventor: Dominguis Botella, Marc, 08790 Gelida (Barcelona) (ES); Moreno Colom, Javier, 08519 Malla (Barcelona) (ES)
(74) Representative: ZBM Patents - Zea, Barlocci & Markvardsen

(56) References cited:
- EP-A1- 2 184 517
- JP-A- 2006 347 306
- JP-A- 2008 239 057
- JP-A- 2008 302 816
- JP-A- 2011 011 617

## Description

A gearshift device for an automotive transmission is disclosed as defined in the preamble of claim 1. The present gearshift device finds particular application in motor vehicles and the like and provides a universal solution for a wide range of existing gearshift arrangements, especially those of the electronic shift-by-wire type.

### BACKGROUND ART

Shift-by-wire devices are known allowing a driver to remotely perform operations such as gear shifting without the need for applying high efforts. Gear selection for example in automatic transmissions is transmitted electronically to a control unit with no or minimum mechanical linkages.

Such devices typically comprise a selector lever and a shifter base. The selector lever is usually provided with a ball portion defining a ball-and-socket joint with the shifter base for pivotal mounting of the selector lever to the shifter base. A sensor arrangement is provided such that the positions of the lever can be accurately determined and sent to a control unit in order to drive the vehicle transmission accordingly.

One example of such devices is disclosed in US2008078604. The shift-by-wire gearshift device in this document comprises a selector lever that is pivotally mounted through a ball joint. The ball joint is attached to a bracket. This device further includes angle-sensing means arranged in the joint.

US4912997 shows a further example of a shift-by-wire gearshift device for motor vehicles. This gearshift device comprises a manual selector lever that is pivotally mounted on a support. The lower end of the lever has a ball follower for pre-loaded travel on a contoured surface to feel like conventional manual gear shifting operations.

In these prior art solutions, the gearshift device should be designed specifically according to the particular model characteristics to which the device is to be fitted. This involves undesirable high costs.

Document EP2184517, which represents the closest prior art to the subject-matter of claim 1, discloses a shift by wire gearshift device comprising a fixed part and a knob that can be moved relative to the fixed part for shifting operations. This gearshift device further comprises means for detecting the position of the knob relative to the fixed part including a magnet associated with the knob.

The aim of the present device is to provide a universal shift-by-wire gearshift device that can be mounted in a wide range of existing motor vehicles by providing a universal module. This universal module is designed such that it can be easily fitted almost to any standard lever arrangement available in the market.

### SUMMARY

A gearshift device is disclosed herein as defined in claim 1. The gearshift device is preferably of the shift-by-wire type. Further embodiments of the present gearshift device are defined in the dependent claims and will be also described further below.

The present gearshift device comprises a pivotable selector lever to be manually actuated by the user or driver for controlling a motor vehicle transmission such as an automatic transmission.

The present gearshift device further includes a universal detection module. This universal detection module can be easily and quickly mounted to any existing gearshift device due to its particular construction as fully disclosed hereinbelow.

The detection module of the present gearshift device comprises an electronic circuit board. The electronic circuit board includes a continuous magnetic sensor such as a three dimensional (3D) magnetic sensor. This sensor may be, for example, a Hall effect sensor. Other sensors are not ruled out on condition that the positions of the selector lever can be accurately determined.

It is preferred that the magnetic sensor has programmable magnetic field sensitivity. Gearshift devices having sensors with different magnetic field sensitivity can be therefore manufactured by the gearshift device production lines. This provides finished gearshift devices with extreme accuracy ensuring proper operation during their working life.

The detection module further comprises a fastening element. This fastening element is attached to the above-mentioned electronic circuit board by any

suitable means. The fastening element is designed such that, when assembled, it is placed above the continuous magnetic sensor. The fastening member may be, for example, a fastening ring adapted for being removably mounted on the electronic circuit board.

The detection module further includes a detection module shaft. The detection module shaft has a first (lower) end and a second (upper) end. The first, lower end of the detection module shaft is provided with a ball portion. This ball portion has a recess adapted for receiving a magnet therein. The first, lower end of the detection module shaft could be designed into a different shape although a design having at least a substantially spherical shape is preferred for a proper linkage of the detection module shaft such that the detection module shaft is allowed to be pivotally moved. This lower end may be formed integral with the detection module shaft or it may be a separate piece to be attached thereto.

The ball portion of the detection module shaft formed at the first end thereof is suitable to be pivotally received into the above mentioned fastening element. The ball portion of the detection module shaft and the ball portion in the fastening element form a ball-and-socket joint. In an assembled condition, the detection module shaft can be pivotally moved in the housing relative to the fastening element.

The second, upper end of the detection module shaft is suitably adapted for engaging one portion of the selector lever, i.e. the lower end. More particularly, the second, upper end of the detection module shaft is suitably adapted to engage any standard lever in known shifter devices. For this purpose, it is preferred that said second, upper end of the detection module shaft is also a ball portion, that is, substantially spherical in shape. Again, other ball-like shapes could be alternatively used. This upper end of the detection module shaft may be formed integral with the detection module shaft or it may be a separate piece to be attached thereto. With this construction, the selector lever and the detection module shaft can be rotated relative to each other.

The present gearshift device may further include guide means. Such guide means may be adapted for ensuring accurate attachment of the fastening element to the electronic circuit board in a way that the magnet and the sensor are at least substantially centred relative to each other. This will therefore ensure a proper operation of the gearshift device in terms of optimum detection of lever positions.

More specifically, the guide means may comprised, for example, shaped cavities such as channels formed in the electronic circuit board. Such cavities or channels may be adapted for receiving corresponding shaped protrusions projecting from the fastening element. Guide means may be of course protrusions projecting from the electronic circuit board for receiving corresponding shaped cavities or channels formed in the fastening element. A combination of the above arrangement could be also possible; for example, electronic circuit board could have a number of cavities and protrusions shaped and distributed to match corresponding protrusions and cavities formed in the fastening element. In any case, both the cavities and the protrusions formed in any of the fastening element and the electronic circuit board may be corresponding or complementary in shape for an easy and quick positioning of the fastening element to the electronic circuit board ensuring that the magnet and the sensor are at least substantially centred relative to each other.

Flexible legs may be further provided in the fastening element. Flexible legs may be any flexible element suitable for quickly clamping the fastening element to the electronic circuit board. It is preferred that the legs are shaped such that the fastening element can be detached from the electronic circuit board. The flexible legs may any in number and shape as required. They are preferably formed projecting upwards from the fastening element and then bent downwards in a way providing a suitable radial clamping force to at least one portion of the electronic circuit board. The flexible legs may be alternatively provided in the electronic circuit board for clamping fastening element. Embodiments in which the flexible legs are provided both in the fastening element and the electronic circuit board could be also possible such that a radial force is applied inwardly.

Still in some embodiments, the ball portion in the first, lower end of the detection module shaft may include a number of legs projecting therefrom. Such legs may be formed projecting from the detection module shaft in a manner for suitably retaining the magnet in position inside the ball portion. The number and shape of the legs formed in the ball portion of the detection module shaft may be any according to the particular requirements. It particularly depends upon on the features (size, weight, etc.) of the magnet to be fitted inside the recess or cavity formed within the shaft ball portion in the first, lower end of the detection module shaft. Other different means for retaining the magnet in position into the shaft ball portion are not ruled out.

A universal shift-by-wire gearshift device is obtained that can be mounted in a wide range of existing gear shifting lever arrangements for motor vehicles. This is made possible due to the provision of the universal module that can be easily fit almost to any standard shift-by-wire device. This advantageously provides a high degree of freedom for system design.

Additional objects, advantages and features of one embodiment of the present gearshift device will become apparent to those skilled in the art upon examination of the description that follows.

### BRIEF DESCRIPTION OF THE DRAWINGS

Particular embodiments of the present gearshift device for an automotive transmission will be described in the following by way of a non-limiting example, with reference to the appended drawings, in which:
Figure 1 is a perspective general view one embodiment of a universal detection module suitable for a gearshift device for an automotive transmission;
Figure 2 is a perspective sectional part view of the universal detection module in figure 1;
Figure 3 is an elevational sectional view of one embodiment of a gearshift device taken along line A-A in figure 7;
Figure 4 is an elevational sectional view of the embodiment of the gearshift device in figure 3 taken along line B-B in figure 7;
Figure 5 is an elevational sectional view of the embodiment of the gearshift device taken along line A-A in figure 7 as in figure 3 with the lever shown in a different shifting position;
Figure 6 is a perspective longitudinal sectional view of the gearshift device where the housing has been removed for the sake of clarity; and
Figure 7 is a top plan view of the embodiment of the gearshift device of the figures above.

### DETAILED DESCRIPTION OF EMBODIMENTS

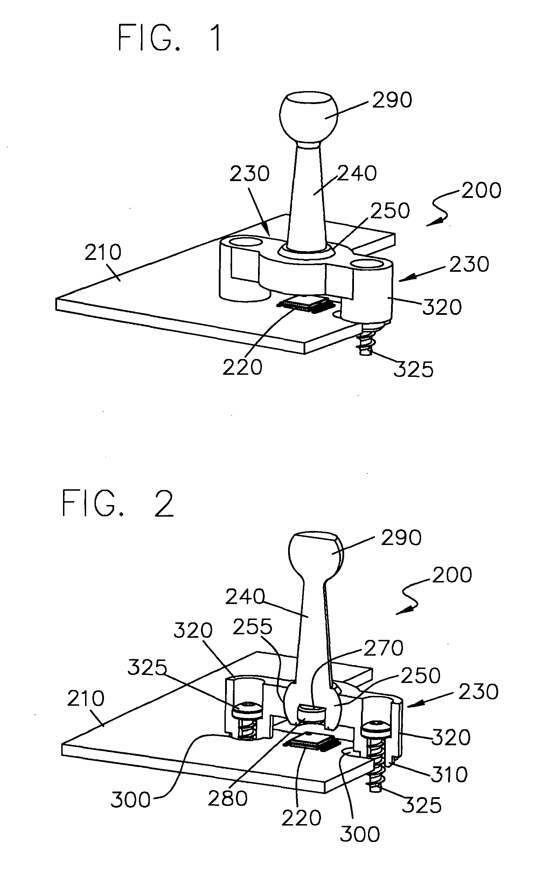

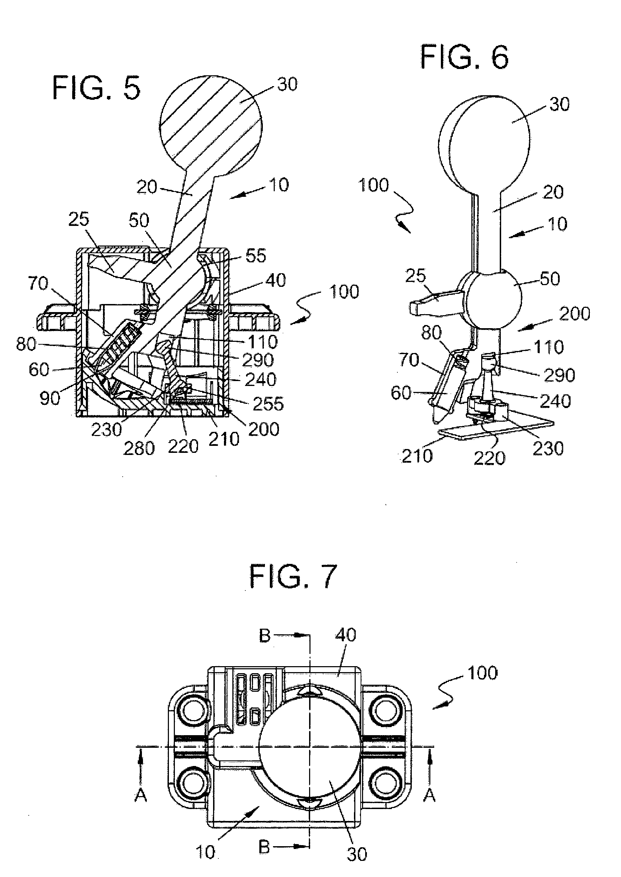

One example of an electronic shift-by-wire gearshift device is disclosed herein and shown in the figures 1-7 of the drawings. The gearshift device of the embodiment shown has been indicated as a whole by reference numeral 100.

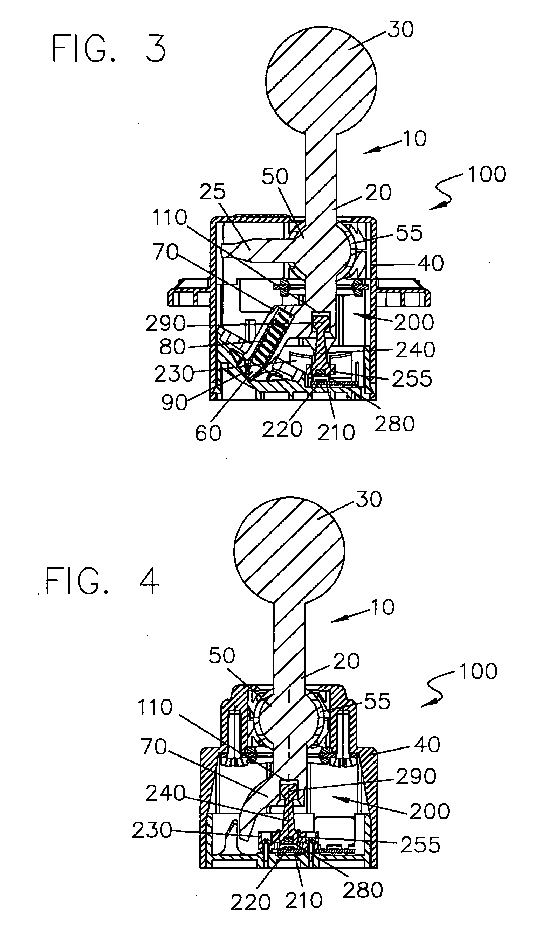

The gearshift device 100 shown in figures 3-7 comprises a selector lever 10. The selector lever 10 has a main shaft 20 that is provided with a knob 30 fitted at one end thereof. The knob 30 may be formed integral with the selector lever main shaft 20 or it may be provided as a separate piece to be attached thereto by any suitable means.

A housing 40 is further provided. The housing 40 has an upper opening through which the selector lever main shaft 20 passes. The housing 40 serves the purpose of enclosing the main parts of the gearshift device 100 and acts as a support for some of said parts such as the selector lever 10, as shown in the figures 3-5 and explained further below.

The selector lever 10 further includes a ball portion 50. The ball portion 50 in the embodiment shown is formed in a substantially intermediate portion of the selector lever main shaft 20. Other alternative locations for the ball portion 50 in the selector lever main shaft 20 are also possible. The ball portion 50 is suitable for being received within a ball receptacle 55. The ball receptacle 55 is formed inside the housing 40. This ball receptacle 55 together with the ball portion 50 in the selector lever main shaft 20 form a ball-and-socket joint 50, 55. The selector lever 10 is thus linked to the housing 40 through the ball-and-socket joint 50, 55 as shown in figures 3-6. Other mechanical linkages may be alternatively used, such as crosspieces in a universal joint, etc.

The selector lever 10 further includes a selector pin 25. The selector pin 25 is for gear selection upon movement of the selector lever main shaft 20. The selector pin 25 projects outwards from one lower side of the selector lever main shaft 20 substantially perpendicular thereto, as shown in the figures of the drawings.

The shift-by-wire gearshift device 100 of the embodiment shown herein includes a ball cavity 110. The ball cavity 110 is formed in a lower portion of the selector lever main shaft 20. An extension 70 is also formed projecting inclined downwardly from said lower portion of the selector lever main shaft 20 as shown in figures 3-6.

The selector lever 10 further includes a lower follower finger 60. The follower finger 60 is at least partially inserted within a longitudinal cavity in the extension 70 of the selector lever shaft 20. The follower finger 60 is inserted within said longitudinal cavity in the extension 70 such that an end tip of the follower finger 60 projects outwards from the extension 70. The longitudinal cavity in the extension 70 is shaped such that the follower finger 60 can be freely displaced therein relative to the extension 70. Biasing means 80 comprising for example a compression spring are provided inside the longitudinal cavity of the extension 70 of the selector lever shaft 20. The follower finger 60 is thus urged such that its end tip is biased against a contoured surface 90 by the biasing means 80. The biasing means 80 therefore causes the end tip of the follower finger 60 to be always substantially in contact with the contoured surface 90. This contoured surface 90 is a 3D-relief surface having uneven grooves or channels on which the follower finger 60 rests and slides when the selector lever 10 is actuated by a user. The contoured surface 90 is arranged inside the housing 40 at one bottom portion thereof. This provides the user with a shifting feeling as the selector lever 10 is operated for remotely controlling the motor vehicle transmission.

The shift-by-wire gearshift device 100 of the embodiment shown in the figures further includes a universal detection module indicated as a whole by reference numeral 200. The universal detection module 200 is shown alone in figures 1 and 2, which have been illustrated not linked to the selector lever 10 for the sake of clarity.

The universal detection module 200 is part of the shift-by-wire gearshift device 100 as shown in figures 3-6 and it is an important feature of the disclosed embodiment. The particular construction of the universal detection module 200 renders it to be suitable for being mounted to almost any standard gearshift device 100.

The universal detection module 200, in an operating condition, is fitted within the housing 40. The universal detection module 200 comprises an electronic circuit board, or printed circuit board (PCB), 210. The electronic circuit board 210 includes a continuous magnetic sensor 220. This type of magnetic sensors provide a continuously variable output electronic signal. Other magnetic sensors can be used such as a three dimensional (3D) magnetic sensors and the like suitable for detecting the positions of the lever 10 and then transmitting a shift signal to a transmission control unit (not shown). In the embodiment shown, the magnetic sensor has programmable magnetic field sensitivity so the present shift-by-wire gearshift device 100 has extreme accuracy ensuring proper operation during its working life.

The detection module 200 further comprises a fastening element such as a fastening ring 230. The fastening ring 230 is removably attached to the electronic circuit board 210, as shown in the figures. When attached to the electronic circuit board 210, the fastening ring 230 is positioned above the magnetic sensor 220.

The detection module 200 further includes a detection module shaft 240. The detection module shaft 240 has a first, lower end and a second, upper end. The first, lower end of the detection module shaft 240 is provided with a detection module ball portion 250. The detection module ball portion 250 may be completely, or only partly, spherical in shape. Other shapes could be possible as long as the detection module ball portion 250 can be suitably received within a complementarily shaped detection module ball receptacle 255 formed inside the fastening ring 230. Again, the detection module ball portion 250 in the detection module shaft 240 and the detection module shaped ball receptacle 255 in the fastening ring 230 form a ball-and-socket joint 250, 255 as shown in figure 2. Therefore, when assembled, the detection module shaft 240 can be pivotally moved relative to the fastening ring 230 within the housing 40.

Referring now to figure 2, a recess 270 is formed within the lowermost portion of the detection module ball portion 250 of the shaft 240. The recess 270 is conveniently sized and shaped for snugly receiving a magnet 280. The magnet 280 is chosen to generate a magnetic field strong enough to be detected by the sensor 220.

The construction is such that the magnetic sensor 220 is placed near a position where the selector lever 10 is moved. The magnetic sensor 220 detects the rotation of the detection module shaft 240 by detecting a change in magnetic flux density that occurs when the magnet 280 is moved over the magnetic sensor 220. This makes it possible to determine the position of the lever 10 in order to operate the vehicle transmission. In some embodiments, a metal plate, such as a ferromagnetic plate, may be provided coupled with the electronic circuit board 210 for enhancing the magnetic field from the magnet 280.

As shown in figures 3-7, a ball portion 290 is also formed in the second, upper end of the detection module shaft 240. The ball portion 290 in the second, upper end of the detection module shaft 240 may be integral with it or it may be a separate piece to be mounted thereto. In any case, the ball portion 290 is suitably adapted for being pivotally fitted inside the above mentioned ball cavity 110 formed in the lower portion of the selector lever shaft 20.

The general construction of the upper end of the shaft 240 renders the detecting module highly adaptable for engaging almost any standard lever in existing shifter devices and particularly to many existing standard levers.

As clearly shown in figure 2 of the drawings, guide means are provided in the detection module 200. In the particular embodiment shown in said figure 2, the guide means comprise two opposite shaped cavities 300. In this embodiment, the shaped cavities 300 are formed in the electronic circuit board 210. The shaped cavities 300 are sized and shaped for receiving corresponding shaped protrusions 310 projecting downwards from the fastening ring 230.

The shaped protrusions 310 project downwards from two opposite fastening portions 320 formed in the fastening ring 230 as shown in figure 2. In the embodiment shown in this figure 2, the fastening portions 320 of the fastening ring 230 consist of respective hollow cylinders projecting downwards and protruding into the shaped cavities 300 formed in the electronic circuit board 210. Inside the hollow cylinders 320 respective screws 325 are fitted for fixing the fastening ring 230 to the electronic circuit board 210. When assembled, the detection module shaft 240 is pivotally clamped to the fastening ring 230 and at a small distance over the sensor 220. As stated above, the detection module shaft 240 can be pivotally moved relative to the fastening ring 230.

The guide means 300, 310 serve the purpose of ensuring the attachment of the fastening ring 230 to the electronic circuit board 210 such that the magnet 280 is placed over the sensor 220 in a way that both are at least substantially centred relative to each other. The guide means 300, 310 thus allows for an easy and quick positioning of the fastening ring 230 to the electronic circuit board 210 with the magnet 280 and the sensor 220 always centred relative to each other.

Although only a number of particular embodiments and examples of the gearshift device for an automotive transmission have been disclosed herein, it will be understood by those skilled in the art that other alternative embodiments and/or uses thereof and obvious modifications and equivalents thereof are possible. The present disclosure covers all possible combinations of the particular embodiments of the present gearshift device herein described.

Reference signs related to drawings and placed in parentheses in a claim are solely for attempting to increase the intelligibility of the claim. Sais reference signs shall not be construed as limiting the scope of the claim. Thus, the scope of the present gearshift device should not be limited by particular embodiments, but should be determined only by a fair reading of the claims that follow.

## Claims

1. A gearshift device (100) for an automotive transmission comprising a selector lever (10) comprising a first pivotable shaft (20) for controlling the transmission, **characterized in that** it further includes a universal detection module (200), the universal detection module (200) comprising:
- an electronic circuit board (210) including a continuous magnetic sensor (220);
- a fastening element (230) to be attached to the electronic circuit board (210) and positioned above the continuous magnetic sensor (220);
- a second pivotable shaft (240) having:
- a first end with a ball portion (250) to be fitted into the fastening element (230) forming a ball and socket joint; and
- a second end (290) adapted for engaging one end (110) of the first pivotable shaft (20); and
- a magnet (280) fitted inside the ball portion (250) of the second pivotable shaft.

2. The gearshift device (100) of claim 1, wherein the magnetic sensor is a Hall effect sensor (220).

3. The gearshift device (100) of claim 1 or 2, wherein the magnetic sensor is a three-dimensional sensor (220).

4. The gearshift device (100) of any of the preceding claims, wherein the magnetic sensor has programmable magnetic field sensitivity.

5. The gearshift device (100) of any of the preceding claims, wherein the fastening element (230) is removably attached to the electronic circuit board (210).

6. The gearshift (100) device of any of the preceding claims, wherein it further includes guide means (300, 310) adapted for ensuring the positioning of the fastening element (230) to the electronic circuit board (210) such that the magnet (280) and the sensor (220) are at least substantially centred relative to each other.

7. The gearshift device (100) of any of the preceding claims, wherein it further includes flexible legs provided in one or both of the fastening element (230) and the electronic circuit board (210) for clamping the fastening element (230) and the electronic circuit board (210) to each other.

8. The gearshift device (100) of any of the preceding claims, wherein the second end (290) of the second pivotable shaft (240) is at least substantially spherical in shape such that the selector lever (10) can be rotated thereto.

9. The gearshift device (100) of any of the preceding claims, wherein the ball portion (250) of the second pivotable shaft (240) includes a number of legs projecting in a manner for retaining the magnet (280) in position inside the ball portion (250).

## Patentansprüche

1. Eine Schaltvorrichtung (100) für ein Kraftfahrzeuggetriebe umfassend einen Wählhebel (10) umfassend eine erste drehbare Achse (20) zur Steuerung der Kraftübertragung, **dadurch gekennzeichnet, dass** sie weiterhin ein universelles Erkennungsmodul (200) beinhaltet, wobei das universelle Erkennungsmodul (200) folgendes umfasst:
- eine elektronische Leiterplatte (210) beinhaltend einen kontinuierlichen Magnetsensor (220);
- ein Befestigungselement (230) zur Befestigung an der elektronischen Leiterplatte (210) und das oberhalb des kontinuierlichen Magnetsensors (220) gesetzt wird;
- eine zweite drehbare Achse (240), welche folgendes hat:
- ein erstes Ende mit einem Kugelteil (250), welcher in das Befestigungselement (230) einzupassen ist, sodass ein Kugelgelenk gebildet wird; und
- ein zweites Ende (290), das so angepasst ist, um ein Ende (110) der ersten drehbaren Achse (20) einzugreifen; und
- einen Magnet (280), der im Kugelteil (250) der zweiten drehbaren Achse eingepasst ist.

2. Die Schaltvorrichtung (100) des Anspruchs 1, wobei der Magnetsensor ein Hall-Sensor (220) ist.

3. Die Schaltvorrichtung (100) des Anspruchs 1 oder 2, wobei der Magnetsensor ein dreidimensionaler Sensor (220) ist.

4. Die Schaltvorrichtung (100) von einem der vorhergehenden Ansprüche, wobei der Magnetsensor programmierbare Magnetfeldempfindlichkeit hat.

5. Die Schaltvorrichtung (100) von einem der vorhergehenden Ansprüche, wobei das Befestigungselement (230) mit der elektronischen Leiterplatte (210) entfernbar verbunden ist.

6. Die Schaltvorrichtung (100) von einem der vorhergehenden Ansprüche, wobei sie weiterhin Führungsmittel (300, 310) beinhaltet, welche zur Sicherung der Position des Befestigungselements (230) auf der elektronischen Leiterplatte (210) angepasst sind, so dass der Magnet (280) und der Sensor (220) mindestens zentriert zueinander gerichtet sind.

7. Die Schaltvorrichtung (100) von einem der vorhergehenden Ansprüche, wobei sie weiterhin flexible Beine beinhaltet, die in einem von dem Befestigungselement (230) und der elektronischen Leiterplatte (210), oder in beiden, bereitgestellt sind, zur Klemmung des Befestigungselements (230) und der elektronischen Leiterplatte (210) miteinander.

8. Die Schaltvorrichtung (100) von einem der vorhergehenden Ansprüche, wobei das zweite Ende (290) der zweiten drehbaren Achse (240) mindestens im Wesentlichen kugelförmig ist, so dass der Wählhebel (10) darum drehen kann.

9. Die Schaltvorrichtung (100) von einem der vorhergehenden Ansprüche, wobei der Kugelteil (250) der zweiten drehbaren Achse (240) eine Anzahl von Beinen beinhaltet, die so herausragen, dass sie den Magnet (280) im Kugelteil (250) an seiner Stelle halten.

## Revendications

1. Un dispositif (100) de changement de vitesses pour une transmission d'automobile comprenant un levier sélecteur (10) comprenant un premier arbre (20) de pivotement pour contrôler la transmission, **caractérisé en ce qu'**il inclut en outre un module (200) de détection universel, comprenant le module (200) de détection universel :
- une carte électronique (210) incluant un capteur (220) magnétique continu ;
- un élément (230) de fixation destiné à être attaché à la carte électronique (210) et situé au-dessus du capteur (220) magnétique continu ;
- un deuxième arbre (240) de pivotement ayant :
- un premier bout avec une partie sphérique (250) destinée à être ajustée dans l'élément (230) de fixation en formant un joint à rotule ; et
- un deuxième bout (290) adapté pour intervenir dans un bout (110) du premier arbre (20) de pivotement ; et
- un aimant (280) ajusté dans la partie sphérique (250) du deuxième arbre de pivotement.

2. Le dispositif (100) de changement de vitesses de la revendication 1, dans lequel le capteur magnétique est un capteur (220) à effet Hall.

3. Le dispositif (100) de changement de vitesses de la revendication 1 ou 2, dans lequel le capteur magnétique est un capteur (220) tridimensionnel.

4. Le dispositif (100) de changement de vitesses de l'une quelconque des revendications précédentes, dans lequel le capteur magnétique a une sensibilité programmable au champ magnétique.

5. Le dispositif (100) de changement de vitesses de l'une quelconque des revendications précédentes, dans lequel l'élément (230) de fixation est attaché de manière amovible à la carte électronique (210).

6. Le dispositif (100) de changement de vitesses de l'une quelconque des revendications précédentes, comprenant en outre des moyens (300, 310) de guidage adaptés pour assurer le positionnement de l'élément (230) de fixation sur la carte électronique (210) de façon que l'aimant (280) et le capteur (220) sont au moins essentiellement centrés l'un par rapport à l'autre.

7. Le dispositif (100) de changement de vitesses de l'une quelconque des revendications précédentes, incluant en outre des pieds souples fournis dans l'un ou dans tous deux de l'élément (230) de fixation et de la carte électronique (210) afin de gripper l'élément (230) de fixation et la carte électronique (210) l'un avec l'autre.

8. Le dispositif (100) de changement de vitesses de l'une quelconque des revendications précédentes, dans lequel le deuxième bout (290) du deuxième arbre (240) de pivotement est au moins essentiellement sphérique, de façon que le levier sélecteur (10) peut pivoter autour de celui-là.

9. Le dispositif (100) de changement de vitesses de l'une quelconque des revendications précédentes, dans lequel la partie sphérique (250) du deuxième arbre (240) de pivotement inclut un nombre de pieds faisant saillie de manière à garder l'aimant (280) en place dans la partie sphérique (250).
